# EUROPÄISCHE PATENTSCHRIFT

(11) **EP 2 965 160 B1**
(45) Veröffentlichungstag und Bekanntmachung des Hinweises auf die Patenterteilung: **02.10.2019**
(21) Anmeldenummer: 14704285.7
(22) Anmeldetag: 10.02.2014
(51) Int. Cl.: G05D 1/02

(54) **VERFAHREN ZUR STEUERUNG DER FAHRZEUGE, INSBESONDERE TRANSPORTFAHRZEUGE, EINER ANLAGE**
METHOD FOR CONTROLLING THE VEHICLES, IN PARTICULAR TRANSPORT VEHICLES, OF A SYSTEM
PROCÉDÉ SERVANT À COMMANDER DES VÉHICULES, EN PARTICULIER DES VÉHICULES DE TRANSPORT, D'UNE INSTALLATION

(30) Priorität: 07.03.2013 DE 102013003834
(43) Veröffentlichungstag der Anmeldung: 13.01.2016
(73) Patentinhaber: SEW-EURODRIVE GmbH & Co. KG, 76646 Bruchsal (DE)
(72) Erfinder: SCHÄFER, Thomas, 76689 Neuthard (DE); MALLIK, Quamrul Hasan, 76139 Karlsruhe (DE); SCHMIDT, Josef, 76676 Graben-Neudorf (DE); STOCKENBERGER, Ulrich, 76694 Forst (DE); KAZAROV, Roman, 68309 Mannheim (DE)
(74) Vertreter: Tüngler, Eberhard
(86) Internationale Anmeldenummer: PCT/EP2014/000359
(87) Internationale Veröffentlichungsnummer: WO 2014/135243

(56) Entgegenhaltungen:
- EP-A1- 2 508 956
- WO-A1-2005/096114
- WO-A2-2007/149711
- WO-A2-2007/149711
- US-A- 5 179 329
- US-A- 5 283 739
- US-A1- 2006 095 160
- US-A1- 2010 228 389

## Beschreibung

Die Erfindung betrifft ein Verfahren zur Steuerung der Fahrzeuge, insbesondere Transportfahrzeuge, einer Anlage und Anlage.

Es ist allgemein bekannt, dass in einer Anlage Transportfahrzeuge Objekte transportieren von einer Startposition zu einer Zielposition.

**Aus der** US 5 179 329 A ist eine Spurführung für einen mobilen Roboter bekannt.

Aus der US 5 283 739 A ist ein statisches Antikollisionsverfahren für ein System mit mehreren automatisch geführten Fahrzeugen (AGV) bekannt.

Aus der WO 2005/096114 A1 ist ein Verfahren zur Vermeidung der Kollision in einem System mit mehreren Robotern bekannt, wobei eine erweiterte Kollisionskarte genutzt wird.

Aus der US 2010/228389 A1 ist ein Spurführungssystem für Fahrzeuge bekannt. Aus der WO 2007 / 149711 A2 ist als nächstliegender Stand der Technik ein Verfahren für das koordinierte Bewegen von mobilen Fahreinheiten bekannt.

Der Erfindung liegt daher die Aufgabe zugrunde, ein Verfahren zur Steuerung der Fahrzeuge, insbesondere Transportfahrzeuge, einer Anlage weiterzubilden, wobei Kollisionen vermeidbar sind.

Erfindungsgemäß wird die Aufgabe bei dem Verfahren nach den in Anspruch 1 und bei der Anlage nach den in Anspruch 6 angegebenen Merkmalen gelöst.

Wichtige Merkmale der Erfindung bei dem Verfahren zur Steuerung der Fahrzeuge, insbesondere Transportfahrzeuge, einer Anlage, sind, dass Routen der Fahrzeuge bestimmt werden,
wobei die Route eines jeweiligen Fahrzeugs durch eine zeitliche Abfolge von Segmenten dargestellt wird, wobei jedem Zeitschritt hierbei ein jeweiliges Segment zugeordnet ist,
wobei jede Route von einem jeweiligen Startsegment zu einem Zielsegment verläuft,
wobei jedes Segment ein Segment des Verfahrbereichs der Fahrzeuge ist, insbesondere wobei das Segment ein Liniensegment, ein Flächensegment oder ein Raumsegment ist.

Gemäß einem Ausführungsbeispiel ist jedes Segment derart ausgedehnt, dass jedes der Fahrzeuge zum Durchfahren des Segments eine endliche nichtverschwindende Zeitdauer benötigt,
wobei die Segmente nicht überlappen,
wobei sich zu keinem Zeitschritt in einem der Segmente mehr als ein einziges Fahrzeug befindet.

Erfindungsgemäß weist jedes Fahrzeug ein Positionserfassungssystem auf und es ist eine Datenübertragungsverbindung zu einer zentralen Steuerung in der Anlage vorgesehen, insbesondere wobei zyklisch wiederholt die Positionen der Fahrzeuge erfasst werden und an eine zentrale Steuerung übermittelt werden.

Von Vorteil ist dabei, dass nicht die Bahnkurve, also die Positionsabfolge vorgegeben wird, sondern nur die Segmentabfolge, wobei das Fahrzeug seine Position oder Bahn selbst steuert. Von einer zentralen Steuerung wird also das zu jedem Zeitschritt für das jeweilige Fahrzeug bestimmte Segment vorgegeben. Das Fahrzeug darf sich in dem dem Zeitschritt entsprechenden Zeitabschnitt nur innerhalb des Segments bewegen. Dabei steuert das Fahrzeug entlang einer Bahnkurve, die zum für den nächsten Zeitschritt vorgegebenen Segment hingerichtet ist. In diesem nächsten Zeitschritt muss das Fahrzeug dann in das nächste Segment eintreten und dort wiederum zum wiederum nächsten Segment hingerichtet fahren.

Auf diese Weise ist durch die Segmentierung des Verfahrbereichs der Anlage erreichbar, dass Kollisionen vermeidbar sind. Denn die Segmente sind derart aufeinander abfolgend, dass keine Kollisionen auftreten.

Wichtige Merkmale bei dem Verfahren zur Steuerung der Fahrzeuge, insbesondere Transportfahrzeuge, einer Anlage, sind, dass in einem ersten Schritt die Routen der Fahrzeuge von einer jeweiligen Startposition bis zu einer Zielposition bestimmt werden,
wobei zu keinem Zeitschritt die Routen sich kreuzen,
insbesondere also zu jedem Zeitschritt die jeweiligen Routenpositionen der Fahrzeuge beabstandet sind.

Von Vorteil ist dabei, dass Kollisionen vermeidbar sind, indem die Routen in der Raum-Zeit kollisionsfrei bestimmbar sind.

Bei einer vorteilhaften Ausgestaltung werden in einem zweiten Schritt die Positionen der Fahrzeuge erfasst werden und an eine zentrale Steuerung übermittelt werden, wobei das Erfassen und Übermitteln zyklisch wiederholt wird. Von Vorteil ist dabei, dass eine ein kritisches Maß überschreitende Abweichung von der Sollbahn, insbesondere Sollabfolge der Segmente, erkennbar ist und eine Neuberechnung der Route für das abweichende Fahrzeug oder für alle Fahrzeuge ausführbar ist.

Erfindungsgemäß wird als jeweilige Route zu einem jeden Zeitschritt ein Verfahrbereichssegment bestimmt, insbesondere also die Route eine Reihe von einem jeweiligen Zeitschritt zugeordneten Verfahrbereichssegmenten entspricht,

insbesondere wobei jedes Verfahrbereichssegment derart groß ist, dass eines der Fahrzeuge in ihm aufnehmbar ist. Von Vorteil ist dabei, dass nicht die Bahnkurve, also Soll-Positionsabfolge, für das Fahrzeug vorgegeben wird sondern die Soll-Abfolge der Segmente.

Erfindungsgemäß ist zu jedem Zeitschritt in keinem der Verfahrbereichssegmente mehr als eines der Fahrzeuge angeordnet, insbesondere also nur keines oder eines der Fahrzeuge angeordnet. Von Vorteil ist dabei, dass keine Kollisionen auftreten.

Bei einer vorteilhaften Ausgestaltung wird bei Abweichung eines Fahrzeugs von der für das Fahrzeug bestimmten Route die Route für das Fahrzeug erneut bestimmt,
wobei zu keinem Zeitschritt die Routen sich kreuzen,
insbesondere also zu jedem Zeitschritt jedes Fahrzeug in einem jeweils unterschiedlichen Segment angeordnet ist und/oder die jeweilige Routenpositionen der Fahrzeuge beabstandet sind. Von Vorteil ist dabei, dass auch bei Abweichungen Kollisionen vermeidbar sind.

Erfindungsgemäß wird den Fahrzeugen eine Prioritätsstufe zugeordnet und bei der Bestimmung von Routen werden diejenigen Routen vorrangig bestimmt, welche für Fahrzeuge mit höherer Prioriätsstufe vorgesehen sind. Von Vorteil ist dabei, dass die höher priorisierten Fahrzeuge eine kürzere Bahn durchfahren dürfen und somit auch schneller zum Ziel gelangen dürfen.

Wichtige Merkmale bei der Anlage sind, dass sie zur Durchführung eines vorgenannten Verfahrens vorgesehen ist, wobei jedes Fahrzeug einen Sensor zur Überwachung eines Raumbereichs aufweist, insbesondere wobei der Raumbereich relativ zum Fahrzeug vorgesehen ist.

Erfindungsgemäß weist jedes Fahrzeug ein Positionserfassungssystem auf und zur Datenübertragung mit einer zentralen Steuerung eingerichtet ist.

Erfindungsgemäß weist das Fahrzeug einen elektromotorischen Antrieb zum Verfahren des Fahrzeugs im Verfahrbereich auf, wobei der Antrieb einen Elektromotor aufweist, der aus einem Energiespeicher des Fahrzeugs versorgbar ist und/oder der aus einer Sekundärwicklung versorgbar ist, welche induktiv gekoppelt mit einem in der Anlage stationär verlegten Primärleiter ist.

Weitere Vorteile ergeben sich aus den Unteransprüchen.

Die Erfindung wird nun anhand von Abbildungen näher erläutert:
In der Figur 1 ist eine jeweilige Fahrtroute zweier Fahrzeuge (1, 2) auf einer diskreten zweidimensionalen Fläche dargestellt.

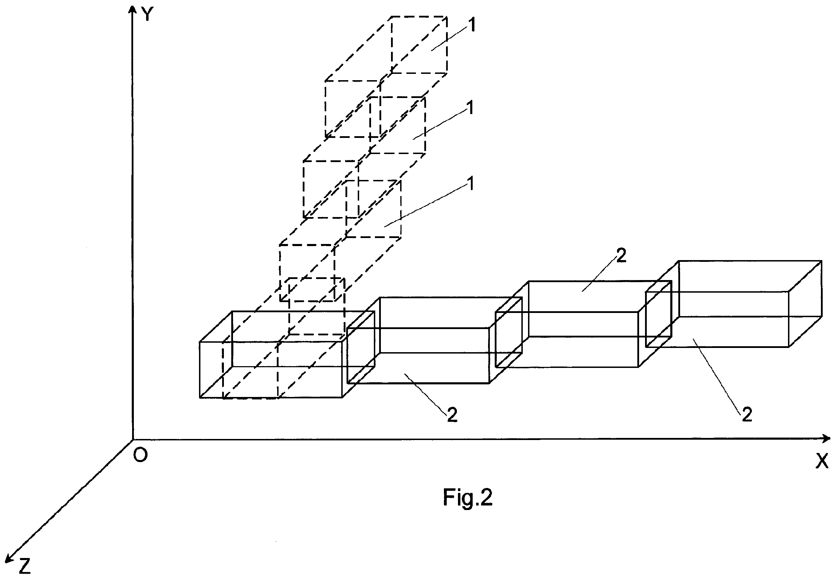

In der Figur 2 ist eine räumliche Darstellung der Fahrtrouten zweier Fahrzeuge (1, 2) im Raum dargestellt.

Bei dem erfindungsgemäßen Verfahren werden für jeweilige Fahrzeuge (1, 2) Fahrtrouten bestimmt, welche von einer jeweiligen Startposition zu einer jeweiligen Zielposition verlaufen.

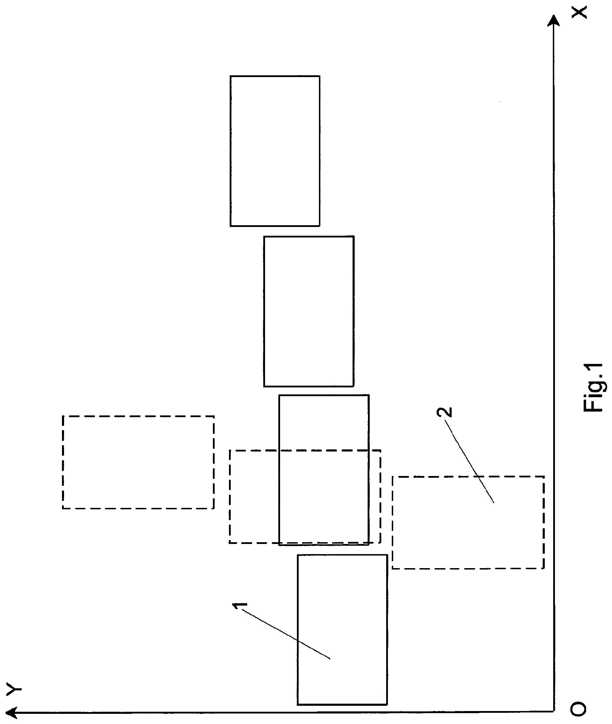

Wie in Figur 1 gezeigt, können sich die Routen der Fahrzeuge (1, 2) kreuzen.

Um eine Kollision zu vermeiden, wird aber der Kreuzungsbereich von den jeweiligen Fahrzeugen zu verschiedenen Zeitpunkten erreicht und durchschritten.

Bei Bodenbeweglichen Fahrzeugen (1, 2) ist der von dem jeweiligen Fahrzeug (1, 2) erreichbare Verfahrbereich zweidimensional.

Wenn jedoch ein jeweiliges Fahrzeug auch ein Hubwerk aufweist, ist der von dem jeweiligen Fahrzeug (1, 2) oder zumindest der von diesem transportierten Last erreichbare Verfahrbereich dreidimensional.

Zur Bestimmung der Routen wird der Verfahrbereich in diskrete Segmente unterteilt. Jedes dieser Segmente ist größer als jedes der Fahrzeuge (1, 2). Jedes Segment ist somit bei zweidimensionaler Ausführung ein Flächenabschnitt, insbesondere Rechteck, Quadrat oder dergleichen flächenfüllend anordenbarer Raumkörper und bei dreidimensionaler ein Quaderabschnitt oder Kubusabschnitt oder dergleichen raumfüllend anordenbarer Raumkörper.

Die Zeit wird ebenfalls diskretisiert.

Eine Route ist somit durch eine Abfolge von Segmenten definiert, wobei jedem Zeitschritt ein Segment zugeordnet ist.

Die reale Bahn des jeweiligen Fahrzeugs ist derart ausgeführt, indem das Fahrzeug sicherstellt, dass es im zum Zeitschritt gehörenden Segment sich befindet. Die jeweilige Position des Fahrzeugs Innerhalb eines jeweiligen Segments ist unerheblich.

Die Routen werden von einer zentralen Steuerung derart bestimmt, dass zu einem Zeitschritt jedes Fahrzeug in einem unterschiedlichen Segment sich befindet. Niemals dürfen zwei oder mehr Fahrzeuge also zu einem Zeitschritt im selben Segment sich befinden.

Somit sind Kollisionen sicher vermeidbar.

Jedes Fahrzeug weist auch einen Sensor auf zur Erkennung von Gegenständen oder Personen, die innerhalb des empfindlichen Bereichs des Sensors angeordnet sind oder auftreten. Bei Erkennung eines solchen Gegenstands oder einer solchen Person wird das Fahrzeug gestoppt und/oder es wird ein Ausweichmanöver durchgeführt, so dass das Fahrzeug von der von der zentralen Steuerung bestimmten Route, also Sollroute, abweicht.

Die Fahrzeuge weisen jeweils ein Positionserfassungssystem auf und melden ihre jeweilige Position wiederkehrend, insbesondere zyklisch und/oder zeitlich regelmäßig an die zentrale Steuerung. Hierzu wird vorzugsweise ein Funkkanal, insbesondere WLAN, oder Infrarot verwendet.

Nach dem Auftreten einer Abweichung von der Sollroute wird von der zentralen Steuerung für das entsprechende Fahrzeug eine neue Sollroute bestimmt, wobei diese neue Sollroute wiederum ohne Kollision mit einer der Routen der übrigen Fahrzeuge bestimmt ist.

Falls jedoch keine neue solche kollisionsfreie Sollroute für das Fahrzeug bestimmbar ist, werden neue Sollrouten für alle Fahrzeuge bestimmt, also die Routen von den vorliegenden Istpositionen zu den Zielpositionen berechnet.

Die Fahrzeuge sind als Transportfahrzeuge ausgeführt, insbesondere als automatisch geführtes Fahrzeug (AGV) oder als fahrerloses Transportsystem (FTS)

Bei einem weiteren erfindungsgemäßen Ausführungsbeispiel wird bei der Routenbestimmung auch eine dem jeweiligen Fahrzeug zugeordnete Priorität berücksichtigt. Dabei werden zunächst die kürzesten oder schnellst durchfahrbaren Routen für die Fahrzeuge der obersten Priorität bestimmt, danach die Routen der Fahrzeuge mit niedrigerer Priorität. Diese Schritte werden bis zur Bestimmung der Routen für die Fahrzeuge mit der niedrigsten Priorität **ausgeführt.**

### Bezugszeichenliste

- 1: erstes Fahrzeug
- 2: erstes Fahrzeug

- X: erste räumliche Koordinate
- Y: zweite räumliche Koordinate
- Z: dritte räumliche Koordinate
- T: zeitliche Koordinate

## Patentansprüche

1. Verfahren zur Steuerung von Fahrzeugen, insbesondere Transportfahrzeugen, einer Anlage,
wobei in einem ersten Schritt Routen der Fahrzeuge von einer jeweiligen Startposition bis zu einer Zielposition bestimmt werden,
wobei in einem zweiten Schritt Positionen der Fahrzeuge erfasst werden und an eine zentrale Steuerung übermittelt werden, wobei das Erfassen und Übermitteln zyklisch wiederholt wird,
wobei die Route eines jeweiligen Fahrzeugs durch eine zeitliche Abfolge von Segmenten dargestellt wird, wobei jedem Zeitschritt hierbei ein jeweiliges Segment zugeordnet ist,
wobei als jeweilige Route zu jedem Zeitschritt ein Verfahrbereichssegment bestimmt wird,
wobei zu jedem Zeitschritt in keinem Verfahrbereichssegmente mehr als eines der Fahrzeuge angeordnet ist,
**dadurch gekennzeichnet, dass**
dem jeweiligen Fahrzeug eine Segmentabfolge vorgegeben wird, wobei das jeweilige Fahrzeug seine Position oder Bahn selbst steuert.
wobei von der zentralen Steuerung das zu jedem Zeitschritt für das jeweilige Fahrzeug bestimmte Segment vorgegeben wird,
wobei das Fahrzeug sich in dem dem Zeitschritt entsprechenden Zeitabschnitt nur innerhalb des Segments bewegen darf,
wobei das Fahrzeug entlang einer Bahnkurve steuert, die zum für den nächsten Zeitschritt vorgegebenen Segment hin gerichtet ist, wobei in diesem nächsten Zeitschritt das Fahrzeug dann in das nächste Segment eintreten muss und dort wiederum zum wiederum nächsten Segment hin gerichtet fährt,
bei Abweichung eines jeweiligen Fahrzeugs von der für das jeweilige Fahrzeug bestimmten Route die Route für das jeweilige Fahrzeug erneut bestimmt wird,
wobei den Fahrzeugen eine Prioritätsstufe zugeordnet wird und bei der Bestimmung von Routen diejenigen Routen vorrangig bestimmt werden, welche für Fahrzeuge mit höherer Prioriätsstufe vorgesehen sind.

2. Verfahren nach Anspruch 1,
**dadurch gekennzeichnet, dass**
zu jedem Zeitschritt die jeweilige Routenpositionen der Fahrzeuge beabstandet sind.

3. Verfahren nach mindestens einem der vorangegangenen Ansprüche,
**dadurch gekennzeichnet, dass**
die Route eine Reihe von einem jeweiligen Zeitschritt zugeordneten Verfahrbereichssegmenten entspricht.

4. Verfahren nach mindestens einem der vorangegangenen Ansprüche,
**dadurch gekennzeichnet, dass**
jedes Verfahrbereichssegment derart groß ist, dass eines der Fahrzeuge in ihm aufnehmbar ist.

5. Verfahren nach mindestens einem der vorangegangenen Ansprüche,
**dadurch gekennzeichnet, dass**
zu jedem Zeitschritt jedes Fahrzeug in einem jeweils unterschiedlichen Segment angeordnet ist und/oder die jeweilige Routenpositionen der Fahrzeuge beabstandet sind.

6. Anlage zur Durchführung eines Verfahrens nach mindestens einem der vorangegangenen Ansprüche,
**dadurch gekennzeichnet, dass**
jedes Fahrzeug einen Sensor zur Überwachung eines Raumbereichs aufweist, insbesondere wobei der Raumbereich relativ zum Fahrzeug vorgesehen ist,
wobei jedes Fahrzeug ein Positionserfassungssystem aufweist und zur Datenübertragung mit einer zentralen Steuerung eingerichtet ist,
wobei jedes Fahrzeug einen elektromotorischen Antrieb zum Verfahren des Fahrzeugs im Verfahrbereich aufweist, wobei der Antrieb einen Elektromotor aufweist, der aus einem Energiespeicher des Fahrzeugs versorgbar ist und der aus einer Sekundärwicklung versorgbar ist, welche induktiv gekoppelt mit einem in der Anlage stationär verlegten Primärleiter ist.

## Claims

1. A method for controlling vehicles, in particular transport vehicles, of an installation,
wherein in a first step routes of the vehicles from a respective starting position to a target position are determined,
wherein in a second step positions of the vehicles are detected and transmitted to a central control unit, wherein the detection and transmission are repeated cyclically,
wherein the route of a respective vehicle is represented by a chronological sequence of segments, wherein a respective segment is associated with each time step in this case,
wherein a driving region segment is determined as respective route for each time step,
wherein for each time step not more than one of the vehicles is disposed in any of the driving region segments,
**characterised in that**
a segment sequence is specified for the respective vehicle, the respective vehicle controlling its position or path itself,
wherein the segment determined for each time step for the respective vehicle is specified by the central control unit,
wherein the vehicle in the time period corresponding to the time step is allowed to move only within the segment,
wherein the vehicle drives along a trajectory which is directed towards the segment specified for the next time step, with in this next time step the vehicle then having to enter into the next segment and there in turn driving directed towards the next segment in turn,
upon a respective vehicle deviating from the route determined for the respective vehicle the route for the respective vehicle is determined anew,
wherein a priority stage is associated with the vehicles and when determining routes those routes which are provided for vehicles with a higher priority stage are determined as priority.

2. A method according to Claim 1,
**characterised in that**
the respective route positions of the vehicles are spaced apart for each time step.

3. A method according to at least one of the preceding claims,
**characterised in that**
the route corresponds to a series of driving region segments associated with a respective time step.

4. A method according to at least one of the preceding claims,
**characterised in that**
each driving region segment is of such a size that one of the vehicles can be accommodated therein.

5. A method according to at least one of the preceding claims,
**characterised in that**
for each time step each vehicle is disposed in a segment which is different in each case and/or the respective route positions of the vehicles are spaced apart.

6. An installation for carrying out a method according to at least one of the preceding claims,
**characterised in that**
each vehicle has a sensor for monitoring a spatial region, in particular wherein the spatial region is provided relative to the vehicle,
wherein each vehicle has a position detection system and is set up for data transmission with a central control unit,
wherein each vehicle has an electrically-powered drive for driving the vehicle in the driving region, the drive having an electric motor which can be supplied from an energy store of the vehicle and which can be supplied from a secondary winding which is inductively coupled with a primary conductor which is laid in stationary manner in the installation.

## Revendications

1. Procédé de commande de véhicules, notamment de véhicules de transport d'une installation,
sachant que, lors d'une première étape, des itinéraires des véhicules sont déterminés à partir d'un emplacement respectif de départ, jusqu'à un emplacement de destination, sachant que, lors d'une seconde étape, des emplacements desdits véhicules sont détectés et transmis à une commande centrale, la détection et la transmission étant réitérées cycliquement,
l'itinéraire d'un véhicule considéré étant représenté par une séquence temporelle de segments, un segment respectif étant alors associé à chaque incrément temporel,
sachant qu'un segment de plage de déplacements est déterminé en tant qu'itinéraire respectif pour chaque incrément temporel,
sachant que, pour chaque incrément temporel, aucun des segments de plage de déplacements ne présente un nombre supérieur à un, au sein desdits véhicules,
**caractérisé par le fait**
**qu'**une séquence de segments est préétablie pour le véhicule considéré, lequel véhicule considéré pilote lui-même son emplacement ou sa trajectoire,
le segment, déterminé pour le véhicule considéré à chaque incrément temporel, étant préétabli par la commande centrale,
un mouvement dudit véhicule étant autorisé uniquement dans les limites dudit segment, dans le laps de temps correspondant audit incrément temporel,
le véhicule effectuant un pilotage le long d'une trajectoire dirigée vers le segment préétabli pour l'incrément temporel successif, sachant que, durant cet incrément temporel successif, ledit véhicule doit ensuite pénétrer nécessairement dans le segment successif dans lequel il se déplace, de nouveau, en direction du segment à son tour successif,
dans le cas où un véhicule considéré s'écarte de l'itinéraire déterminé pour ledit véhicule considéré, ledit itinéraire attribué audit véhicule considéré est déterminé à nouveau, sachant qu'un niveau de priorité est affecté aux véhicules et que, lors de la détermination d'itinéraires, les itinéraires prévus pour des véhicules à niveau de priorité supérieur sont déterminés prioritairement.

2. Procédé selon la revendication 1,
**caractérisé par le fait que**
les emplacements considérés, dans les itinéraires des véhicules, sont espacés à chaque incrément temporel.

3. Procédé selon au moins l'une des revendications précédentes,
**caractérisé par le fait que**
l'itinéraire correspond à une série de segments de plage de déplacements associés à un incrément temporel considéré.

4. Procédé selon au moins l'une des revendications précédentes,
**caractérisé par le fait que**
chaque segment de plage de déplacements présente un dimensionnement tel que l'un des véhicules puisse y être inclus.

5. Procédé selon au moins l'une des revendications précédentes,
**caractérisé par le fait que**,
pour chaque incrément temporel, chaque véhicule se trouve dans un segment respectivement différent, et/ou les emplacements considérés sont espacés dans les itinéraires des véhicules.

6. Installation dévolue à la mise en oeuvre d'un procédé conforme à au moins l'une des revendications précédentes,
**caractérisée par le fait que**
chaque véhicule comporte un capteur affecté à la surveillance d'une zone spatiale, laquelle zone spatiale est notamment prévue par rapport audit véhicule,
chaque véhicule étant muni d'un système de détection d'emplacements, et étant équipé d'une commande centrale en vue de la transmission de données,
chaque véhicule étant doté d'un entraînement par moteur électrique, en vue du déplacement dudit véhicule dans la plage de déplacements, lequel entraînement est pourvu d'un moteur électrique qui peut être alimenté à partir d'un accumulateur d'énergie dudit véhicule et qui peut être alimenté à partir d'un enroulement secondaire couplé, par induction, à un conducteur primaire implanté de manière fixe dans ladite installation.
